# EUROPÄISCHE PATENTANMELDUNG

(11) **EP 3 182 556 A1**
(43) Veröffentlichungstag der Anmeldung: **21.06.2017**
(21) Anmeldenummer: 15201191.2
(22) Anmeldetag: 18.12.2015
(51) Int. Cl.: H02K 1/24, H02K 1/28, F16D 1/093, H02K 15/02

(54) **BEFESTIGUNG EINES POLRADES AUF DER WELLE EINER ELEKTRISCHEN ROTIERENDEN MASCHINE**

(71) Anmelder: Siemens Aktiengesellschaft, 80333 München (DE)
(72) Erfinder: Schönberg, Thomas, 16775 Löwenberger Land (DE); Tefert, Peter, 14052 Berlin (DE)

(57) **Zusammenfassung**

Zusammenfassend betrifft die Erfindung eine elektrische rotierende Maschine (1) mit einem um eine Rotationsache (4) rotierbaren Rotor (3), welcher eine Welle (5), ein die Welle (5) umgebendes Polrad (6) und mindestens einen Spannsatz (7) aufweist. Um bei der Fertigung Zeit und Kosten zu sparen, wird vorgeschlagen, mit dem Spannsatz 7 eine kraftschlüssige Verbindung zwischen der Welle (5) und dem Polrad (6) herzustellen.

## Beschreibung

Die Erfindung betrifft eine elektrische rotierende Maschine mit einem um eine Rotationsache rotierbaren Rotor, welcher eine Welle, ein die Welle umgebendes Polrad und mindestens einen Spannsatz aufweist.

Ferner betrifft die Erfindung ein Verfahren zur Fertigung einer derartigen elektrischen rotierenden Maschine.

Überdies betrifft die Erfindung ein Schiff mit mindestens einer derartigen elektrischen rotierenden Maschine.

Eine derartige elektrische rotierende Maschine, beispielsweise ein Motor oder ein Generator, kommt insbesondere im Schiffsbau vor und ist bevorzugt als Booster-Antrieb für Schiffe mit einer Leistung von mindestens einem Megawatt ausgeführt. Eine derartige elektrische rotierende Maschine weist einen Rotor auf, welcher um eine Rotationsachse drehbar ist. Die Rotationsachse definiert eine axiale Richtung, eine radiale Richtung und eine tangentiale Richtung.

Ein in der Praxis auftretendes Problem derartiger Elektrogroßantriebe besteht darin, dass für die Montage des Rotors auf der üblicherweise langen und schweren Propellerwelle ein hoher Kosten- und Logistikaufwand notwendig ist. Die einzelnen Komponenten des Rotors werden oftmals an verschiedenen Fertigungsstandorten, zu welchen beispielsweise eine Elektromotorenfabrik gehören, hergestellt und dann zu einem anderen Standort transportiert, an welchem ein Zusammenbau der Komponenten erfolgt. Dabei fallen hohe Kosten für den Transport der einzelnen Komponenten an. Weiterhin ist am Ort des Zusammenbaus der Komponenten, beispielsweise auf einer Werft, geschultes Personal für eine derartige Anpassfertigung erforderlich, was ebenfalls hohe Kosten verursacht. Bislang wurde eine Polrad-Naben-Konstruktion auf die glatte lange und schwere Welle aufgeschrumpft und anschließend die Pole montiert.

Der Erfindung liegt die Aufgabe zugrunde, eine elektrische rotierende Maschine anzugeben, bei der, um bei der Fertigung Zeit und Kosten zu sparen, die Welle und das Polrad mit einer alternativen Befestigungsvorrichtung kraftschlüssig verbunden sind.

Diese Aufgabe wird durch eine elektrische rotierende Maschine mit einem um eine Rotationsache rotierbaren Rotor, welcher eine Welle, ein die Welle umgebendes Polrad und mindestens einen Spannsatz aufweist gelöst, wobei der Spannsatz dafür vorgesehen ist, eine kraftschlüssige Verbindung zwischen der Welle und dem Polrad herzustellen.

Die Verbindung mit Hilfe eines Spannsatzes, welcher beispielsweise für eine elektrische rotierende Maschine vorgesehen ist, hat, im Vergleich zur Verbindung mit einem Schrumpfverfahren den Vorteil, dass das komplett gefertigte Polrad mit seinen Polen einfach, kostengünstig und schnell mit der Welle kraftschlüssig verbunden werden kann. Dies ist besonders vorteilhaft, da mit einer derartigen Verbindung Kosten bei der Fertigung der elektrischen rotierenden Maschine, insbesondere Schiffsantrieb, im Vergleich zum Stand der Technik eingespart werden und die Maschine schneller geliefert werden kann.

Weiterhin wird die Aufgabe durch ein Verfahren zur Fertigung einer derartigen elektrischen rotierenden Maschine mit einer Welle, einem Polrad und einem Spannsatz gelöst, wobei zunächst die Welle und das Polrad gefertigt werden, wobei bei der Fertigung des Polrades Pole auf die Außenfläche des Polrades montiert werden, wobei in einem folgenden Schritt das Polrad mit den Polen mit Hilfe des Spannsatzes auf die Welle montiert wird.

Durch ein derartiges Fertigungsverfahren ist es möglich, dass die Montage des vollständig gefertigten Polrades auf die vollständig gefertigte Welle an einem anderen Standort, beispielsweise beim Endkunden, erfolgen kann als die Fertigung der Welle und des Polrades.

Ferner wird die Aufgabe durch ein Schiff mit mindestens einer derartigen elektrischen rotierenden Maschine gelöst, wobei die elektrische rotierende Maschine dafür vorgesehen ist, als Motor und/oder Generator betrieben zu werden. So kann die elektrische rotierende Maschine beispielsweise bei Bedarf die Leistung eines Hauptantriebs erhöhen oder aus einem Teil der Antriebsleistung Strom generieren. Durch eine elektrische rotierende Maschine mit einer derartigen Verbindung zwischen Welle und Polrad kann ein Schiff, im Vergleich zum Stand der Technik, kostengünstiger gefertigt werden und das Schiff kann schneller gefertigt werden.

Bevorzugt weist die Welle einen Außendurchmesser von mindestens 500 mm auf. Eine Welle mit einem derartig großen Durchmesser ist erforderlich um eine Leistung von mindestens einem Megawatt zu übertragen.

In einer bevorzugten Ausführungsform weist die Welle an ihren axialen Enden jeweils einen Flansch auf, wobei der Flanschdurchmesser größer als der Außendurchmesser der Welle ist. Der Flanschdurchmesser ist beispielsweise 1,2 bis 1,4 Mal größer als der Außendurchmesser der Welle. Dies ist besonders vorteilhaft, da so eine belastbare Verbindung zwischen der Welle und einem mit der Welle über den Flansch verbundenen Objekt, beispielsweise der Welle für einen Propeller und/oder einen dieselbetriebenen Hauptantrieb, bevorzugt über Schrauben, hergestellt werden kann. Beidseitig angeordnete Flansche sind vorteilhaft, da so die elektrische rotierende Maschine flexibel, beispielsweise im Antriebsstrang eines Schiffes, eingefügt werden kann. Die Montage der Rotorkomponenten auf einer langen und schweren Welle wird dadurch vermieden.

In einer weiteren vorteilhaften Ausgestaltung sind die Welle und die Flansche aus einem Stück gefertigt oder die Flansche sind unlösbar fest mit der Welle verbunden. Beispielsweise wird die Welle mit den Flanschen aus einem Stück gedreht und anschließend nachbearbeitet. Alternativ werden die Flansche beispielsweise mit einem Schrumpfverfahren mit der Welle verbunden, sodass eine unlösbar feste Verbindung zwischen der Welle und den Flanschen entsteht. Derartige Verbindungen sind besonders vorteilhaft, da die Welle auch bei sehr hoher Beanspruchung, beispielsweise bei hohen Drehmomenten und/oder schnellen Drehmomentänderungen, sehr stabil ist.

Auf vorteilhafte Weise weist der Spannsatz einen Außenspannring, einen Innenspannring und eine Spanneinrichtung auf, welche zum Spannen des Spannsatzes vorgesehen ist, wobei der Innenspannring im Außenspannring eingelegt ist und wobei der Außenspannring und der Innenspannring mit der Spanneinrichtung axial gegeneinander verschiebbar sind. Dies ist vorteilhaft, da so das Polrad mit seinen Polen einfach und schnell mit der Welle verbunden werden kann.

In einer weiteren vorteilhaften Ausgestaltung ist der Außenspannring zur Erzeugung einer radial nach außen wirkenden Kraft vorgesehen, wobei die radial nach außen wirkende Kraft dafür vorgesehen ist, den Außenspannring kraftschlüssig mit dem Polrad zu verbinden und wobei der Innenspannring zur Erzeugung einer radial nach innen wirkenden Kraft vorgesehen ist, wobei die radial nach innen wirkende Kraft dafür vorgesehen ist, den Innenspannring kraftschlüssig mit der Welle zu verbinden. Dementsprechend drückt der Außenspannring radial nach außen gegen das Polrad während der im Außenspannring liegende Innenspannring radial nach innen gegen die Welle drückt. Somit ist es möglich mit dem Spannsatz über seine Außenfläche und seine Innenfläche gleichzeitig eine kraftschlüssige Verbindung herzustellen.

Auf besonders vorteilhafter Weise weisen der Außenspannring eine konische Innenfläche und der Innenspannring eine konische Außenfläche auf, wobei die Spanneinrichtung dafür vorgesehen ist, durch axiale Verschiebung der konischen Innenfläche mit der konischen Außenfläche, den Innendurchmesser und den Außendurchmesser des Spannsatzes minimal zu verändern. Bewegen sich beispielsweise der Außenspannring mit seiner konischen Innenfläche und der Innenspannring mit seiner konischen Außenfläche in axiale Richtung aufeinander zu, wobei sich der Innenspannring zumindest teilweise mit der konischen Außenfläche in der konischen Innenfläche des Außenspannrings befindet, so entstehen durch die Verspannung, welche durch den von der Spanneinrichtung erzeugten Druck der konischen Innenfläche und der konischen Außenfläche aufeinander entsteht, eine minimale Vergrößerung des Außendurchmessers und Innendurchmessers des Spannsatzes. Während der Innendurchmesser des Spannsatzes beispielsweise minimal 500 mm beträgt und der Außendurchmesser des Spannsatzes beispielsweise zwischen 600 mm und 700 mm liegt, so sind der Außendurchmesser und der Innendurchmesser des Spannsatzes durch die Verspannung um maximal 2 mm veränderbar. Dies ist vorteilhaft, da sich so sowohl der Außendurchmesser als auch der Innendurchmesser des Spannsatzes gleichzeitig mit nur einer Einstellung der Spanneinrichtung verändern lassen.

Bei einer bevorzugten Ausführungsform weist der Außenspannring mindestens zwei getrennte Außenspannring-Segmente und der Innenspannring weist mindestens zwei getrennte Innenspannring-Segmente auf. Durch die Segmentierung des Spannsatzes in mehrere getrennte, das heißt mechanisch nicht fest verbundene, Segmente, welche bevorzugt in der Draufsicht geometrisch die Form von Kreisringsegmenten aufweisen, ist der Spannsatz beispielsweise derartig zerlegbar, dass er nicht mehr in axiale Richtung über die Welle geschoben werden muss, sondern in Einzelteilen aus einer radialen Richtung um die Welle herum montiert werden kann. Dies ist insbesondere dann vorteilhaft wenn die Welle an den axialen Enden jeweils einen Flansch aufweist, welcher unlösbar mit der Welle verbunden ist oder mit der Welle aus einem Stück gefertigt ist. Vorteilhaft sind die mindestens zwei Außenspannring-Segmente durch mindestens zwei radiale Außenspannring-Schlitze voneinander getrennt und die mindestens zwei Innenspannring-Segmente durch mindestens zwei radiale Innenspannring-Schlitze voneinander getrennt. Durch die Segmentierung mit Hilfe mindestens zweier Schlitze ergeben sich in der Draufsicht bevorzugt kreisringsegmentförmige Außenspannring-Segmente und Innenspannring-Segmente, welche derartig zerlegbar sind, dass beispielsweise die kreisringsegmentförmigen Außenspannring-Segmente und die Innenspannring-Segmente erst seitlich, bevorzugt aus einer im Wesentlichen radialen Richtung kommend, an die Welle angelegt und dann in einem folgenden Schritt zu einem Spannsatz zusammengesetzt werden können. Dies ist vorteilhaft, da so ein Spannsatz einfach, kostengünstig und schnell an eine Welle, welche an ihren axialen Enden jeweils eine Verdickung, beispielsweise einen Flansch, aufweist, montiert werden kann.

In einer weiteren vorteilhaften Ausgestaltung sind die radialen Außenspannring-Schlitze und die radialen Innenspannring-Schlitze in axiale Richtung geradflächig ausgebildet. Das heißt der kreisringförmige Außenspannring und der kreisringförmige Innenspannring werden durch ebene Außenspannring-Schlitze und Innenspannring-Schlitze segmentiert. Dies ist besonders vorteilhaft, da so die Komponenten des Spannsatzes kostengünstig und einfach zu fertigen sind.

Bei einer bevorzugten Ausführungsform sind die Versatzwinkel zwischen jedem der radialen Außenspannring-Schlitze und seinen beiden benachbarten Innenspannring-Schlitzen in etwa gleich groß. Unter einem Versatzwinkel versteht man in diesem Fall den Winkel in dem beispielsweise ein radialer Innenspannring-Schlitz zu einem radialen Außenspannring-Schlitz steht. Wäre der Versatzwinkel beispielsweise 0° so würden der radiale Außenspannring-Schlitz und der radiale Innenspannring-Schlitz axial übereiander liegen. Sind die Versatzwinkel zwischen den Außenspannring-Schlitzen und ihren beiden benachbarten Innenspannring-Schlitzen in etwa gleich groß, so liegen die Innenspannring-Schlitze auf der Winkelhalbierenden der beiden benachbarten Außenspannring-Schlitze. Dies ist besonders vorteilhaft, da so eine spielfreie Verbindung des Spannrings mit der Welle und mit dem Polrad gewährleistet ist.

In einer weiteren vorteilhaften Ausgestaltung ist die Anzahl der Innenspannring-Segmente und der Außenspannring-Segmente eines Spannsatzes gleich groß. Dies ist vorteilhaft, da so eine gleichmäßig drehfeste Verbindung des Spannrings mit der Welle und mit dem Polrad gewährleistet ist.

Auf besonders vorteilhafter Weise weisen zumindest Teile der Welle eine Oberflächenvergütung auf. Bei der Oberflächenvergütung handelt es sich beispielsweise um eine Aufrauhung damit eine festere kraftschlüssige Verbindung zwischen dem Spannring und der Welle hergestellt werden kann.

Bevorzugt weist die Welle an beiden axialen Enden jeweils einen Flansch auf, wobei im folgenden Schritt zunächst die Welle in das Polrad eingeführt wird, daraufhin der vollständig zerlegte Spannsatz zwischen der Welle und dem Polrad derartig zusammengesetzt wird, dass eine kraftschlüssige Verbindung zwischen der Welle und dem Polrad entsteht. Dies ist vorteilhaft, da so ein Spannsatz einfach, kostengünstig und schnell an eine Welle, welche an ihren axialen Enden jeweils eine Verdickung, beispielsweise einen Flansch, aufweist, montiert werden kann.

Bei einer bevorzugten Ausführungsform wird die kraftschlüssige Verbindung zwischen der Welle und dem Polrad durch eine radial nach außen wirkenden Kraft vom Außenspannring des Spannsatzes auf das Polrad und durch eine radial nach innen wirkende Kraft vom Innenspannring auf die Welle hergestellt. Somit ist es möglich mit dem Spannsatz über seine Außenfläche und seine Innenfläche gleichzeitig eine kraftschlüssige Verbindung herzustellen.

In einer weiteren vorteilhaften Ausgestaltung weist das Schiff einen Propeller mit einer Propellerwelle und eine Hauptmaschine mit einer Hauptmaschinenwelle auf, wobei die elektrische rotierende Maschine an einem ersten axialen Ende über einen Flansch mit der Propellerwelle des Propellers verbunden ist und an einem zweiten axialen Ende über einen Flansch mit der Hauptmaschinenwelle der Hauptmaschine verbunden ist. Die beidseitig angeordneten Flansche der elektrischen rotierenden Maschine sind vorteilhaft, da diese so flexibel im Antriebsstrang des Schiffes eingefügt werden kann.

Im Folgenden wird die Erfindung anhand der in den Figuren dargestellten Ausführungsbeispiele näher beschrieben und erläutert.

Es zeigen:
- FIG 1: eine dreidimensionale Darstellung eines Rotors,
- FIG 2: einen Längsschnitt eines Rotors,
- FIG 3: eine dreidimensionale Darstellung eines zweifach segmentierten Spannsatzes,
- FIG 4: eine Draufsicht des zweifach segmentierten Spannsatzes aus FIG 3,
- FIG 5: eine Draufsicht eines dreifach segmentierten Spannsatzes,
- FIG 6: eine Draufsicht eines vierfach segmentierten Spannsatzes,
- FIG 7: einen Querschnitt des zweifach segmentierten Spannsatzes aus FIG 4,
- FIG 8: einen Längsschnitt eines Rotors mit einem segmentierten Spannsatz,
- FIG 9: einen Längsschnitt einer elektrischen rotierenden Maschine und
- FIG 10: ein Schiff mit einer elektrischen rotierenden Maschine.

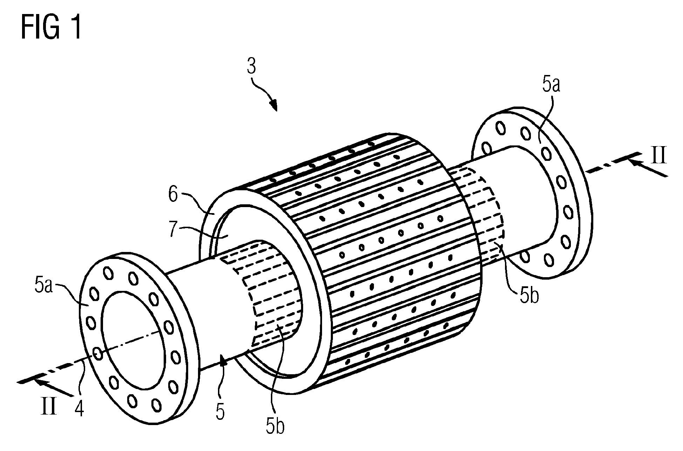

FIG 1 zeigt eine dreidimensionale Darstellung eines Rotors 3, welcher eine Welle 5, ein Polrad 6, welches auch Rotorrohr oder Läuferrohr genannt wird, und einen Spannsatz 7 aufweist und um eine Rotationsachse 4 rotierbar ist. Die Welle 5 weist an ihren axialen Enden jeweils einen Flansch 5a auf, mit dem die Welle 5 an weitere Objekte, beispielsweise eine Welle für einen Propeller, belastbare montiert werden kann.

Um eine große Stabilität der Welle 5 zu gewährleisten, sind die Welle 5 und die Flansche 5a aus einem Stück gefertigt. Beispielsweise wird die Welle 5 mit den Flanschen 5a gedreht und anschließend nachbearbeitet. Eine aus einem Stück gefertigte Welle 5 mit Flanschen 5a an ihren axialen Enden ist auch bei sehr hoher Beanspruchung, beispielsweise bei hohen Drehmomenten und/oder schnellen Drehmomentänderungen, sehr stabil. Alternativ können die Flansche 5a beidseitig nahezu unlösbar fest, beispielsweise über eine Schrumpfverbindung oder über eine Schweißverbindung, mit der Welle 5 verbunden sein.

Die Welle 5 in FIG 1, welche vorzugsweise aus Stahl besteht, ist exemplarisch als Hohlwelle ausgeführt, was Gewicht und Kosten einspart. Weiterhin werden, falls der Rotor 3 für eine fremderregte Synchronmaschine vorgesehen ist, die elektrischen Zuleitungen für die Läuferspulen beispielsweise von einer auf der Welle 5 befindlichen Erregermaschine durch den inneren Hohlraum der als Hohlwelle ausgeführten Welle 5 geführt, da das Drehmoment in der Nähe der Rotationsachse 4 sehr gering ist.

Das Polrad 6 ist mit der Welle 5 über einen Spannsatz 7 kraftschlüssig verbunden. Durch Druck und Reibung des Spannsatzes 7 radial nach innen gegen die Welle 5 und radial nach außen gegen das Polrad 6 entsteht eine auch bei hohen Drehmomenten und/oder schnellen Drehmomentänderungen drehfeste mechanische Verbindung zwischen dem Polrad 6 mit der Welle 5.

Die Welle 5 weist auf den Teilen, welche mit dem Spannsatz 7 verbunden sind, eine Oberflächenvergütung 5b auf. Bei dieser Oberflächenvergütung 5b handelt es sich bevorzugt um eine Aufrauhung, welche die Reibung vergrößert und damit eine Optimierung der Drehfestigkeit der kraftschlüssigen Verbindung zwischen der Welle 5 und dem Spannsatz 7 bewirkt. Ein Korrosionsschutz der Welle 5 steht an dieser Stelle hingegen nicht im Vordergrund. Durch die Aufrauhung kann ein größeres Drehmoment mit der Verbindung zwischen Polrad 6 und Welle 5 übertragen werden. Im Gegensatz zu den Spannsatzanforderungen an die Oberflächengüte der Welle 5 sind die Anforderungen für eine Schrumpfverbindung an die Oberflächengüte, insbesondere die Toleranzen, deutlich höher. Für die Bauteiltoleranzen bei der Verwendung eines Spannsatzes 7 gelten für die Welle 5 die normalen Bearbeitungsansprüche.

Die Montage der Pole 21 einer elektrischen Schiffsmaschine auf der Welle 5 erfolgte bisher beim Kunden, beispielsweise auf einer Werft vor Ort. Dieses Vorgehen erfordert geschultes Personal des Elektromaschinenherstellers auf der Werft.

Bislang wurde eine Polrad-Naben-Konstruktion auf die glatte Welle 5 aufgeschrumpft und anschließend wurden die Pole 21 auf das Polrad 6 montiert. Alterativ wurden die Pole 21 direkt auf eine als Ballenwelle ausgeführte Welle 5 montiert. Eine derartige Ballenwelle ist ein aufwendig mit Dreh- und Fräsbearbeitung bearbeitetes Schmiedeteil, welches einen größeren Durchmesser im Bereich der Pole 21 aufweist.

Durch eine Montage der Pole 21 auf einem Polrad 6 im Herstellerwerk oder bei einem geschulten Partner kann der vorgefertigte Rotor 3 versandt und beim Kunden, beispielsweise auf der Werft, durch Spannringe 7 auf die Welle 5 geklemmt werden. Die aufwändige Montage der Pole 21 wird von der Nabenanbindung entkoppelt. Eine derartig einfache Anbindung des Rotors 3 kann vom Kunden auf der Werft selbst vorgenommen werden. Damit ist eine einfache und schnelle Montage beim Endkunden möglich.

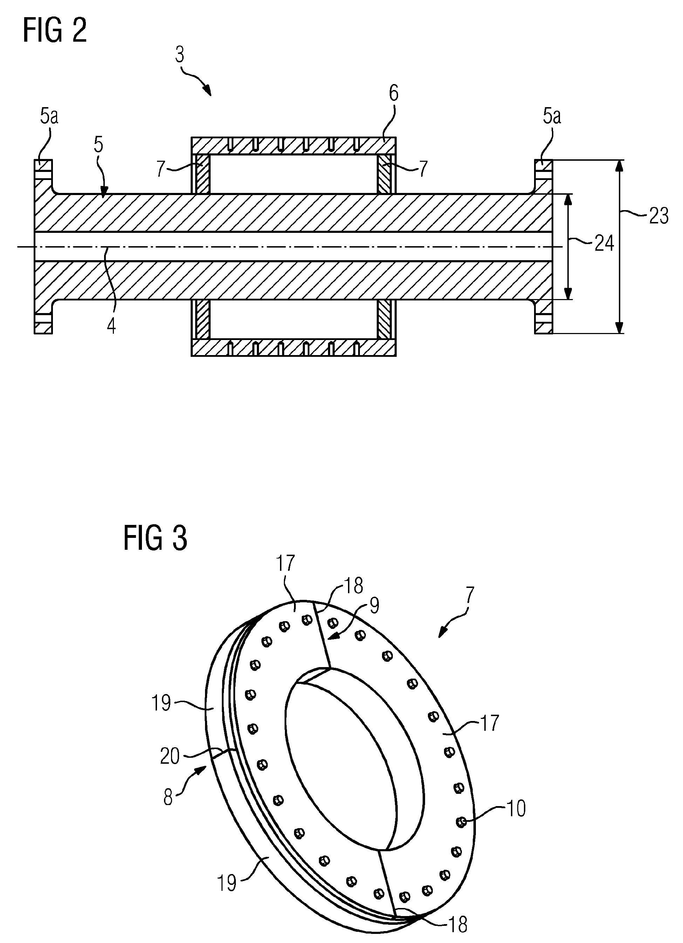

FIG 2 zeigt einen Längsschnitt eines Rotors 3. Dieser Rotor entspricht in seiner Ausgestaltung dem in FIG 1 gezeigten Rotor 3. Der minimale Außendurchmesser 24 der Welle 5 beträgt 500 mm. Der Flanschdurchmesser 23 der an den axialen Enden der Welle 5 befindlichen Flansche 5a ist 1,2 bis 1,4 Mal größer als der Außendurchmesser 24 der Welle 5. Daher ist es, da die Flansche 5a und die Welle 5 aus einem Stück gefertigt sind oder die Welle 5 und die Flansche 5a beidseitig unlösbar fest montiert sind, erforderlich, dass der Spannsatz 7, um eine kraftschlüssige Verbindung der Welle 5 mit dem die Welle 5 umgebenden Polrad 6 herzustellen, zerlegbar und seitlich auf die Welle 5 montierbar ist.

FIG 3 zeigt eine dreidimensionale Darstellung eines zweifach segmentierten Spannsatzes 7, welcher dafür vorgesehen ist eine kraftschlüssige Verbindung einer Welle 5 mit einem Polrad 6 herzustellen. Der Spannsatz 7 weist einen Außenspannring 8 und einen Innenspannring 9 auf. Der Außenspannring 8 wird durch zwei radiale Außenspannring-Schlitze 20 achsensymmetrisch in zwei identische Außenspannring-Segmente 19 geteilt und der Innenspannring 9 wird durch zwei radiale Innenspannring-Schlitze 18 achsensymmetrisch in zwei identische Innenspannring-Segmente 17 geteilt, wobei die Außenspannring-Schlitze 20 und Innenspannring-Schlitze 18 orthogonal zueinander verlaufen. Die Außenspannring-Segmente 19 und Innenspannring-Segmente 17 haben die Form von Kreisringsegmenten.

Der Außenspannring 8 und der Innenspannring 9 sind über Spanneinrichtungen 10, welche beispielsweise als Spannschrauben ausgeführt sind, mechanisch miteinander verbunden. Durch Veränderung der Position der Spanneinrichtungen 10, beispielsweise durch Herein- und Herausschrauben von Spannschrauben, wird der Außendurchmesser des Außenspannrings 8 und der Innendurchmesser des Innenspannrings 9 im Bereich einiger hundert Mikrometer verändert. Die Maximale Auslenkung des Außendurchmessers 15 und des Innendurchmessers 14 des Spannsatzes 7 beträgt zwei Millimeter.

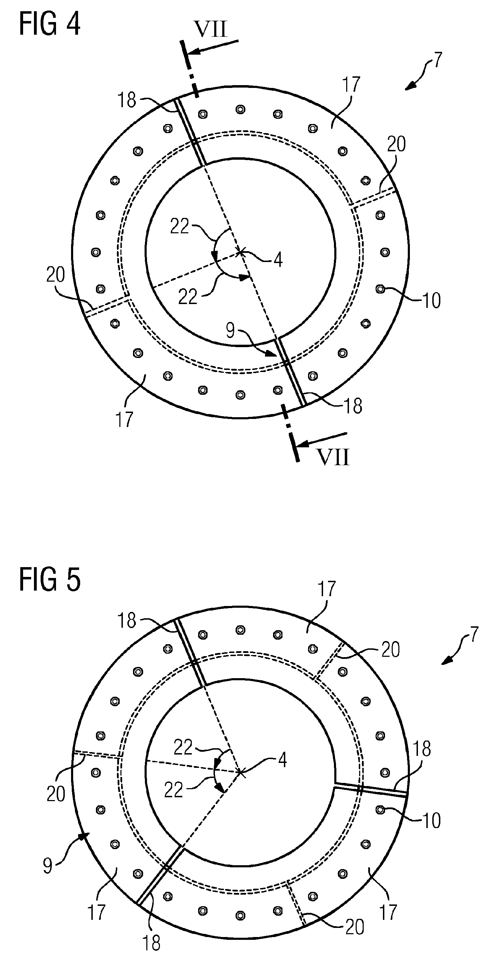

FIG 4 zeigt eine Draufsicht des zweifach segmentierten Spannsatzes aus FIG 3. Die Versatzwinkel 22 zwischen jedem der beiden radialen Außenspannring-Schlitze 20 und seinen benachbarten Innenspannring-Schlitzen 18 betragen in etwa 90°, sodass die beiden Außenspannring-Schlitze 20 auf der Winkelhalbierenden der beiden Innenspannring-Schlitze 18 liegen. Dadurch ist der Spannsatz 7 symmetrisch, was zu einer gleichmäßigen präzisen Verbindung des Spannrings 7 mit der Welle 5 und dem Polrad 6 führt.

FIG 5 zeigt eine Draufsicht eines dreifach segmentierten Spannsatzes. Der Spannsatz 7 entspricht in seiner Ausgestaltung dem Spannsatz 7 aus FIG 3 und FIG 4 mit dem Unterschied, dass der Außenspannring 8 durch drei radiale Außenspannring-Schlitze 20 gleichmäßig in drei identische Außenspannring-Segmente 19 geteilt wird und der Innenspannring 9 durch drei radiale Innenspannring-Schlitze 18 gleichmäßig in drei identische Innenspannring-Segmente 17 geteilt wird. Die Versatzwinkel 22 zwischen jedem der drei radialen Außenspannring-Schlitze 20 und ihren benachbarten Innenspannring-Schlitzen 18 betragen in etwa 60°, sodass die beiden Außenspannring-Schlitze 20 auf der Winkelhalbierenden der beiden Innenspannring-Schlitze 18 liegen.

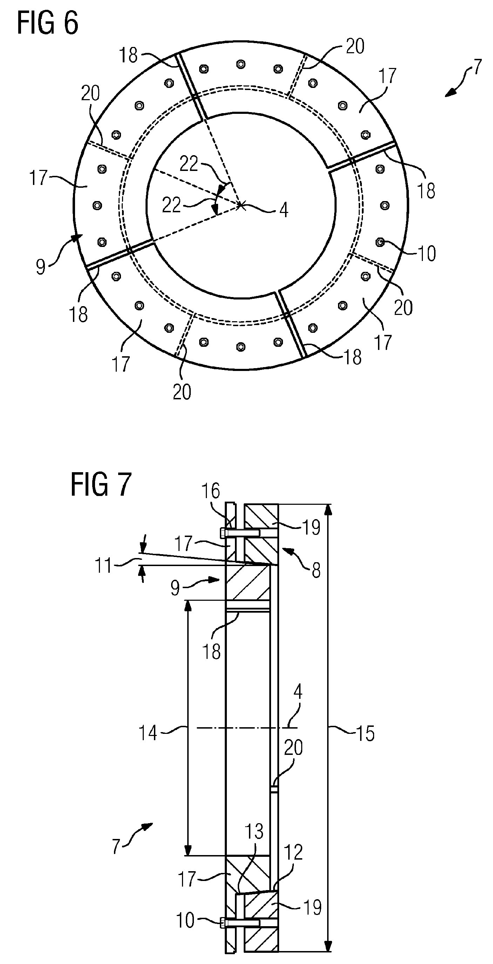

FIG 6 zeigt eine Draufsicht eines vierfach segmentierten Spannsatzes. Der Spannsatz 7 entspricht in seiner Ausgestaltung den Spannsätzen 7 aus FIG 3, FIG 4 und FIG 5 mit dem Unterschied, dass der Außenspannring 8 durch vier radiale Außenspannring-Schlitze 20 gleichmäßig in vier identische Außenspannring-Segmente 19 geteilt wird und der Innenspannring 9 durch vier radiale Innenspannring-Schlitze 18 gleichmäßig in vier identische Innenspannring-Segmente 17 geteilt wird.

Die Versatzwinkel 22 zwischen jedem der vier radialen Außenspannring-Schlitze 20 und ihren benachbarten Innenspannring-Schlitzen 18 betragen in etwa 45°, sodass die beiden Außenspannring-Schlitze 20 auf der Winkelhalbierenden der beiden Innenspannring-Schlitze 18 liegen.

FIG 7 zeigt einen Querschnitt des zweifach segmentierten Spannsatzes 7 aus FIG 4. Der Außenspannring 8 weist eine konische Innenfläche 12 auf während der Innenspannring 9 eine konische Außenfläche 13 aufweist. Der Kegelwinkel 11 der konischen Innenfläche 12 des Außenspannrings 8 und der Kegelwinkel 11 der konischen Außenfläche 13 des Innenspannrings 9 sind in etwa gleich groß, wobei der Innenspannring 9 im Außenspannring 8 liegt und der Außenspannring 8 über seine konische Innenfläche 12 mit der konischen Außenfläche des Innenspannrings 9 verbunden ist. Durch axiale Verschiebung der konischen Innenfläche 12 zur der konischen Außenfläche 13 durch die Spanneinrichtung 10, verändern sich der Außendurchmesser 15 und der Innendurchmesser 14 des Spannsatzes 7 im Bereich einiger hundert Mikrometer bis maximal zwei Millimeter.

Die in FIG 7 als Spannschrauben ausgeführten Spanneinrichtungen 10 verlaufen durch Bohrungen 16 im Innenspannring 9 in axiale Richtung parallel zur Rotationsachse 4 und sind mit dem Außenspannring 8 verschraubt. Durch Einschrauben der Spannschrauben wird der Innenspannring 9 in axiale Richtung tiefer in den Außenspannring 8 gedrückt. Dadurch kommt es zu einer Verspannung zwischen der konischen Innenfläche 12 des Außenspannrings 8 und der konischen Außenfläche 13 des Innenspannrings 9 wodurch sich der Außendurchmesser 15 des Spannsatzes 7 vergrößert und gleichzeitig der Innendurchmesser 14 des Spannsatzes 7 verkleinert. Löst man die Spannschrauben wieder, lässt die Verspannung zwischen der konischen Innenfläche 12 des Außenspannrings 8 und der konischen Außenfläche 13 des Innenspannrings 9 nach und der Außendurchmesser 15 des Spannsatzes 7 verkleinert sich wieder, während sich gleichzeitig der Innendurchmesser 14 des Spannsatzes 7 wieder vergrößert.

Alternative Ausführungsformen bei denen die Spanneinrichtung 10 beispielsweise als Federn ausgeführt ist oder ein hydraulischer oder pneumatischer Spannsatz 7 sind möglich und Gegenstand der Erfindung.

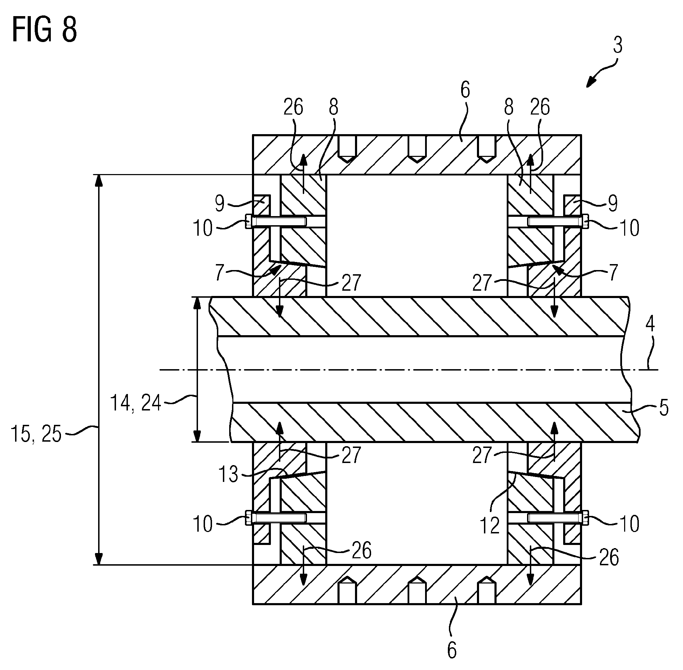

FIG 8 zeigt einen Längsschnitt eines Rotors 3 mit einem segmentierten Spannsatz 7. Der segmentierte Spannsatz 7 ist wie in einer der Figuren 3 bis 7 ausgeführt. Durch Einschrauben der Spannschrauben kommt es zu einer Verspannung zwischen der konischen Innenfläche 12 des Außenspannrings 8 und der konischen Außenfläche 13 des Innenspannrings 9 wodurch sich der Außendurchmesser 15 des Spannsatzes 7 vergrößert und gleichzeitig der Innendurchmesser 14 des Spannsatzes 7 verkleinert. Durch die Vergrößerung des Außendurchmessers 15, welcher näherungsweise dem Innendurchmesser 25 des Polrads 6 entspricht, wird durch den Außenspannring 8 eine radial nach außen wirkenden Kraft 26 erzeugt, welche bewirkt, dass sich der Außenspannring 8 kraftschlüssig mit dem Polrad 6 verbindet. Durch die Verkleinerung des Innendurchmessers 14, welcher näherungsweise dem Außendurchmesser 24 der Welle 5 entspricht, wird durch den Innenspannring 9 eine radial nach innen wirkenden Kraft 27 erzeugt, welche bewirkt, dass sich der Innenspannring 9 kraftschlüssig mit der Welle 5 verbindet. Damit wird über denn Spannsatz 7 eine kraftschlüssige Verbindung der Welle 5 mit dem Polrad 6 hergestellt.

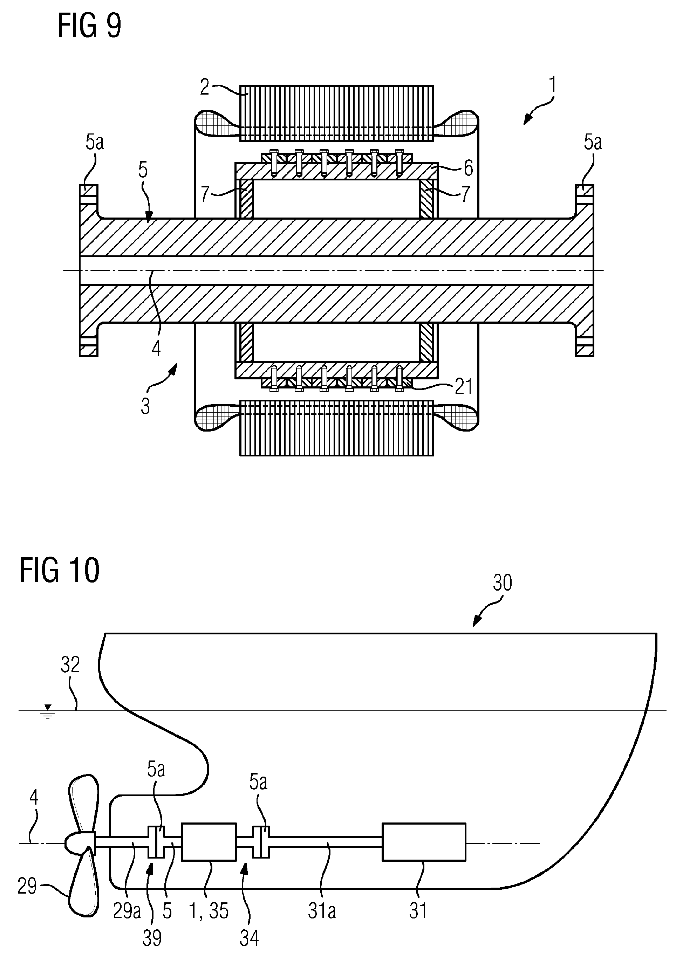

FIG 9 zeigt einen Längsschnitt einer elektrischen rotierenden Maschine 1 mit einem Stator 2 und einem Rotor 3, wobei der Rotor 3 wie in FIG 8 ausgeführt ist. Auf dem Polrad 6 befinden sich die Pole 21 der elektrischen rotierenden Maschine 1, welche in FIG 9 exemplarisch als Permanentmagnete für eine permanenterregte Synchronmaschine ausgeführt sind. Die Permanentmagnete bestehen beispielsweise aus Neodym-Eisen-Bor. Das Polrad 6, welches auch Läuferrohr genannt wird, kann alternativ auch die Erregerwicklungen einer fremderregten Synchronmaschine oder den Kurzschlusskäfig einer Asynchronmaschine tragen, weswegen auch eine fremderregte Synchronmaschine und eine Asynchronmaschine Gegenstand der Erfindung sind.

FIG 10 zeigt ein Schiff 30 mit einer elektrischen rotierenden Maschine 1. Die elektrische rotierende Maschine 1 ist als Booster-Antrieb 35 mit einer Leistung von mindestens einem Megawatt ausgeführt und kann sowohl als Motor als auch als Generator genutzt werden. Die Welle 5 des Booster-Antriebs 35 ist am ersten axialen Ende 33 über einen Flansch 5a, welcher wie in FIG 1 gezeigt und beschrieben ausgeführt ist, mit der Propellerwelle 29a des Propellers 29 verbunden, welcher den Schub für das Schiff 30 erzeugt. Am zweiten axialen Ende 34 ist der Booster-Antrieb 35 über einen Flansch 5a mit der Hauptmaschinenwelle 31a der Hauptmaschine 31 verbunden. So kann der Booster-Antrieb 35 bei Bedarf die Leistung der Hauptmaschine 31 erhöhen oder im Generatorbetrieb aus einem Teil der Antriebsleistung Strom generieren. Die Welle 5 des Booster-Antriebs 35 ist im Verhältnis klein gegenüber der Propellerwelle 29a und der Hauptmaschinenwelle 31a. Daher kann der Booster-Antrieb 35 durch die beidseitig angeordneten Flansche 5a seiner Welle 5 flexibel zwischen dem Propeller 29 und der Hauptmaschine 31 des Schiffes 31 eingefügt werden. Neben dem Propeller 29 befinden sich auch der Boosterantrieb 35 und die Hauptmaschine 31 unter der Wasseroberfläche 32.

Zusammenfassend betrifft die Erfindung eine elektrische rotierende Maschine 1 mit einem um eine Rotationsache 4 rotierbaren Rotor 3, welcher eine Welle 5, ein die Welle 5 umgebendes Polrad 6 und mindestens einen Spannsatz 7 aufweist. Um bei der Fertigung Zeit und Kosten zu sparen, wird vorgeschlagen, mit dem Spannsatz 7 eine kraftschlüssige Verbindung zwischen der Welle 5 und dem Polrad 6 herzustellen.

## Patentansprüche

1. Elektrische rotierende Maschine (1) mit einem um eine Rotationsache (4) rotierbaren Rotor (3), welcher eine Welle (5), ein die Welle (5) umgebendes Polrad (6) und mindestens einen Spannsatz (7) aufweist,
wobei der Spannsatz (7) dafür vorgesehen ist, eine kraftschlüssige Verbindung zwischen der Welle (5) und dem Polrad (6) herzustellen.

2. Elektrische rotierende Maschine (1) nach Anspruch 1, wobei die Welle einen Außendurchmesser (24) von mindestens 500 mm aufweist.

3. Elektrische rotierende Maschine (1) nach einem der Ansprüche 1 oder 2,
wobei die Welle (5) an ihren axialen Enden jeweils einen Flansch (5a) aufweist,
wobei der Flanschdurchmesser (23) größer als der Außendurchmesser (24) der Welle (5) ist.

4. Elektrische rotierende Maschine (1) nach Anspruch 3,
wobei die Welle (5) und die Flansche (5a) aus einem Stück gefertigt sind
oder die Flansche (5a) unlösbar fest mit der Welle (5) verbunden sind.

5. Elektrische rotierende Maschine (1) nach einem der Ansprüche 1 bis 4,
wobei der Spannsatz (7) einen Außenspannring (8), einen Innenspannring (9) und eine Spanneinrichtung (10), welche zum Spannen des Spannsatzes (7) vorgesehen ist, aufweist,
wobei der Innenspannring (9) im Außenspannring (8) eingelegt ist und
wobei der Außenspannring (8) und der Innenspannring (9) mit der Spanneinrichtung (10) axial gegeneinander verschiebbar sind.

6. Elektrische rotierende Maschine (1) nach Anspruch 5, wobei der Außenspannring (8) zur Erzeugung einer radial nach außen wirkenden Kraft (26) vorgesehen ist,
wobei die radial nach außen wirkende Kraft (26) dafür vorgesehen ist, den Außenspannring (8) kraftschlüssig mit dem Polrad (6) zu verbinden und
wobei der Innenspannring (9) zur Erzeugung einer radial nach innen wirkenden Kraft (27) vorgesehen ist,
wobei die radial nach innen wirkende Kraft (27) dafür vorgesehen ist, den Innenspannring (9) kraftschlüssig mit der Welle (5) zu verbinden.

7. Elektrische rotierende Maschine (1) nach einem der Ansprüche 5 oder 6,
wobei der Außenspannring (8) eine konische Innenfläche (12) und der Innenspannring (9) eine konische Außenfläche (13) aufweisen,
wobei die Spanneinrichtung (10) dafür vorgesehen ist, durch axiale Verschiebung der konischen Innenfläche (12) mit der konischen Außenfläche (13), den Innendurchmesser (14) und den Außendurchmesser (15) des Spannsatzes (7) minimal zu verändern.

8. Elektrische rotierende Maschine (1) nach einem der Ansprüche 5 bis 7,
wobei der Außenspannring (8) mindestens zwei getrennte Außenspannring-Segmente (19) aufweist und
wobei der Innenspannring (9) mindestens zwei getrennte Innenspannring-Segmente (17) aufweist.

9. Elektrische rotierende Maschine (1) nach Anspruch 8, wobei die mindestens zwei Außenspannring-Segmente (19) durch mindestens zwei radiale Außenspannring-Schlitze (20) voneinander getrennt sind und
die mindestens zwei Innenspannring-Segmente (17) durch mindestens zwei radiale Innenspannring-Schlitze (18) voneinander getrennt sind.

10. Elektrische rotierende Maschine (1) nach Anspruch 9, wobei die radialen Außenspannring-Schlitze (20) und die radialen Innenspannring-Schlitze (18) in axiale Richtung geradflächig ausgebildet sind.

11. Elektrische rotierende Maschine (1) nach einem der Ansprüche 9 oder 10,
die Versatzwinkel (22) zwischen jedem der radialen Außenspannring-Schlitze (20) und seinen beiden benachbarten Innenspannring-Schlitzen (18) in etwa gleich groß sind.

12. Elektrische rotierende Maschine (1) nach einem der Ansprüche 8 bis 11,
wobei die Anzahl der Innenspannring-Segmente (17) und der Außenspannring-Segmente (19) eines Spannsatzes (7) gleich groß ist.

13. Elektrische rotierende Maschine (1) nach einem der Ansprüche 1 bis 12,
wobei zumindest Teile der Welle (5) eine Oberflächenvergütung (5b) aufweisen.

14. Verfahren zur Fertigung einer elektrischen rotierenden Maschine (1) nach einem der Ansprüche 1 bis 13 mit einer Welle (5), einem Polrad (6) und einem Spannsatz (7),
wobei zunächst die Welle (5) und das Polrad (6) gefertigt werden,
wobei bei der Fertigung des Polrades (6) Pole (21) auf die Außenfläche des Polrades (6) montiert werden,
wobei in einem folgenden Schritt das Polrad (6) mit den Polen (21) mit Hilfe des Spannsatzes (7) auf die Welle (5) montiert wird.

15. Verfahren nach Anspruch 14,
wobei die Welle (5) an beiden axialen Enden jeweils einen Flansch (5a) aufweist,
wobei im folgenden Schritt zunächst die Welle (5) in das Polrad (6) eingeführt werden,
daraufhin der vollständig zerlegte Spannsatz (7) zwischen der Welle (5) und dem Polrad (6) derartig zusammengesetzt wird, dass eine kraftschlüssige Verbindung zwischen der Welle (5) und dem Polrad (6) entsteht.

16. Verfahren nach Anspruch 15,
wobei die kraftschlüssige Verbindung zwischen der Welle (5) und dem Polrad (6) durch eine radial nach außen wirkenden Kraft (26) vom Außenspannring (8) des Spannsatzes auf das Polrad (6) und durch eine radial nach innen wirkende Kraft (27) vom Innenspannring (9) auf die Welle (5) hergestellt wird.

17. Schiff (30) mit mindestens einer elektrischen rotierenden Maschine (1) nach einem der Ansprüche 1 bis 13,
wobei die elektrische rotierende Maschine (1) dafür vorgesehen ist, als Motor und/oder Generator betrieben zu werden.

18. Schiff (30) nach Anspruch 17,
aufweisend einen Propeller (29) mit einer Propellerwelle (29a) und eine Hauptmaschine (31) mit einer Hauptmaschinenwelle (31a),
wobei die elektrische rotierende Maschine (1) an einem ersten axialen Ende (33) über einen Flansch (5a) mit der Propellerwelle (29a) des Propellers (29) verbunden ist und
an einem zweiten axialen Ende (34) über einen Flansch (5a) mit der Hauptmaschinenwelle (31a) der Hauptmaschine (31) verbunden ist.
